# EUROPEAN PATENT APPLICATION

(11) **EP 1 569 437 A2**
(43) Date of publication of application: **31.08.2005**
(21) Application number: 05003940.3
(22) Date of filing: 23.02.2005
(51) Int. Cl.: H04N 1/44

(54) **Multifunction apparatus**

(30) Priority: 26.02.2004 JP 2004052328
(71) Applicant: MATSUSHITA ELECTRIC INDUSTRIAL CO., LTD., Osaka 571-8501 (JP)
(72) Inventor: Nishizawa, Minoru, Utsunomiya-shi Tochigi 321-0932 (JP); Nakatsuka, Hideki, Yokohama-shi Kanagawa 236-0054 (JP)
(74) Representative: Grünecker, Kinkeldey, Stockmair & Schwanhäusser Anwaltssozietät

(57) **Abstract**

Print data for a mailbox print instruction given by a client PC is stored in a hard disk. At the same time, when a user enters a detection area, an electromagnetic wave signal is transmitted to a memory card carried by the user in order to retrieve the user's identification information. Based the retrieved identification information, the user is authenticated. Then, it is determined whether a mailbox print operation is requested in the personal information table. When requested, it is determined whether the print data of the user is stored in the hard disk. When stored, the print data is printed out through the printer.

## Description

### BACKGROUND OF THE INVENTION

### 1. Field of the Invention

The present invention relates to a multifunction apparatus that includes a plurality of functions including a printer function.

### 2. Description of Related Art

In a system where in multifunction apparatus having a printer function is connected to a LAN, and the personal computer (client computer) transmits a print data to the multifunction apparatus as the print instruction. The multifunction apparatus responds by outputting the print data when the print job reaches the multifunction apparatus.

There is also a case where the print data needs to be confidential to others. In response to such a request, a method has been introduced that enables what is called a mailbox printing or a security printing. In this invention, it is hereafter referred to as mailbox printing. A client computer transmits a print instruction to a multifunction apparatus by specifying a format of a mailbox print instruction. Upon receiving the image data, the multifunction apparatus stores the image data in a box prepared for each destination, the box being generated by an exterior memory. This box is associated with an ID and a password that are input by its owner in advance. In order to retrieve data in a box, the owner's ID and password for each destination are required. When the owner's ID and password are input in the multifunction apparatus and when they are recognized, the data is printed (e.g., Related Art 1).

### [Related Art 1] Japanese Laid-Open Patent Application H08-242326

However, it requires a long time for the user to input necessary information (such as mailbox ID and password) from a panel of the multifunction apparatus and to wait for the print data retrieval and for the initiation of the print operation. Therefore, it was necessary to shorten the time spent by the user in front of the multifunction apparatus until the print job is completed, while securing the confidentiality of the data.

### SUMMARY OF THE INVENTION

The present invention addresses the above described problems. The purpose of the invention is to provide a multifunction apparatus that can shorten the time spent by the user in front of the multifunction apparatus when a mailbox print instruction is given.

In the present invention, print data for a mailbox print instruction given by a client is stored in a memory. At the same time, when a user enters a detection area, an electromagnetic wave signal is transmitted to a memory card carried by the user in order to retrieve the user's authentication information. Based the retrieved authenticated information, the user is authenticated. Then, when print data of the user is stored in the memory, the print data is printed out through the printer.

Additionally, in the present invention, upon performing the user authentication, prearranged priority order information for the user is checked to determine whether the current ongoing job needs to be interrupted. When the priority order of the newly authenticated user is higher than the one of the user who instructed the ongoing job, the ongoing job is interrupted and the new job of the newly authenticated user is received.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a functional block diagram illustrating a multifunction apparatus according to an embodiment of the present invention;
Fig. 2 illustrates registration information of a memory card;
Fig. 3 illustrates a personal information table;
Fig. 4 illustrates an application example of some items in the personal information table;
Fig. 5 illustrates a specific example of the overall personal information table;
Fig. 6 illustrates steps for a mailbox print instruction;
Fig. 7 is a first half of a flowchart illustrating a mailbox print operation according to the embodiment;
Fig. 8 is a second half of the flowchart illustrating the mailbox print operation according to the embodiment;
Fig. 9 is a flowchart illustrating a priority order control during the mailbox print operation according to the embodiment;
Fig. 10 is a flowchart illustrating a priority order control when conflicting with a copy job;
Fig. 11 is a flowchart illustrating a priority order control when conflicting with a print job;
Fig. 12 is a block diagram of a server according to the embodiment; and
Fig. 13 is a flowchart of an operation of the server according to the embodiment.

### DETAILED DESCRIPTION OF PREFERRED EMBODIMENTS

The embodiments of the present invention are explained in the following, in reference to the above-described drawings.

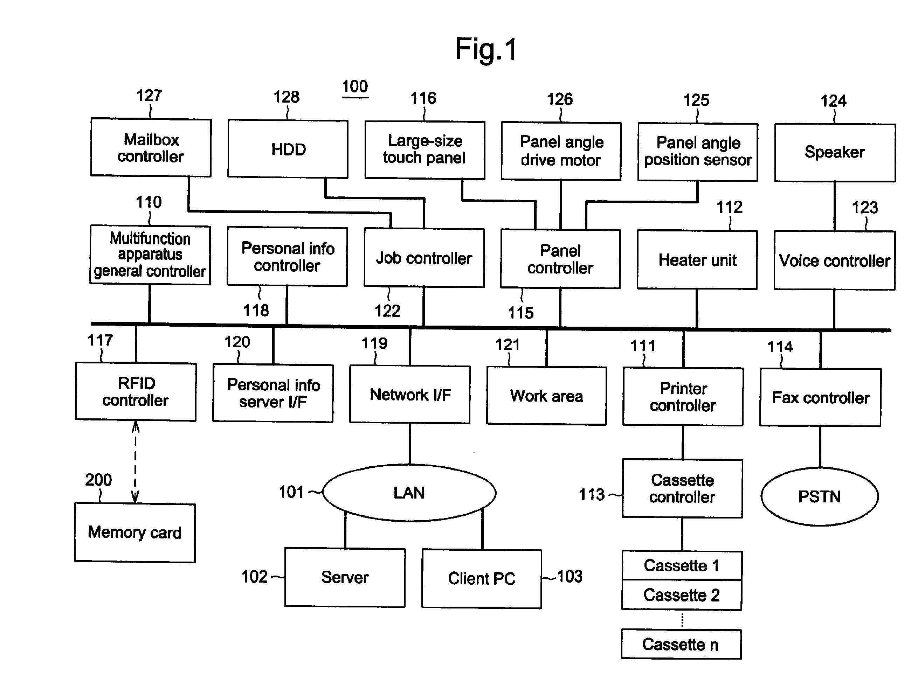

Fig. 1 is a functional block diagram of multifunction apparatus 100 according to the embodiment of the present invention. Fig. 1 also shows a portion of the network. Multifunction apparatus 100 can be connected to various servers 102 and client PCs 103, via LAN 101. Server 102 can be a personal information server that stores a personal information table and performs personal authentication and personal information distribution. Server 102 can also be a web server that executes a job selected from a menu in a remote procedure method. Although multifunction apparatus 100 includes printer, copier, scanner, facsimile, and e-mail functions, Fig. 1 only shows blocks related to the printer and facsimile functions.

Multifunction apparatus general controller 110 controls the overall multifunction apparatus 100. Printer controller 111 executes a process that converts printout data (given from a client) into image data in a predetermined format. Printer controller 111 especially gives a warm up instruction to heater unit (fusing apparatus) 112 in an image generation unit (not shown in the figure), and gives a cassette selection instruction to cassette controller 113. Cassette controller 113 selects an indicated cassette from a plurality of vertically stacked cassettes (1) - (n), and feeds paper to the image generation unit. Fax controller 114 has a modem that is connected to a PSTN to execute steps for a facsimile communication. Panel controller 115 displays an operation screen and the like on large-size touch panel 116 and analyzes an operation input by the user from where the user touched on large-size touch panel 116 and from the displayed contents. RFID controller 117 reads and writes data on memory card 200 using electromagnetic wave signals. When a magnetic field is applied to memory card 200 from RFID controller 117, the reflected electromagnetic wave includes effect (information) corresponding to the memory contents of memory card 200. RFID controller 117 detects the memory contents of memory card 200 using the reflected electromagnetic wave. Conversely, electromagnetic wave signals applied from RFID controller 117 to memory card 200 is used to write information because the signals have a magnetic influence on memory card 200. RFID controller 117 performs non-contact reading/writing of card registration data, via electromagnetic wave signals, from/into memory card 200 in the detection area approximately within a 1-meter radius range. Personal information controller 118 manages the write-in destination of the registration data, which is read from memory card 200. In addition, personal information controller 118 notifies RFID controller 117 of data to be written in memory card 200. Network I/F 119 is a section that interfaces with LAN 101. Personal information server I/F 120 executes a process for communicating with personal information server 102 among servers on LAN 101. Work area 121 stores data received from memory card 200 and personal information server 102. Job controller 122 provides a command to an appropriate unit when a job is executed using a function such as copier, printer, facsimile, scanner, or e-mail functions. In addition, job controller 122 together with mailbox controller 127 controls a printing operation of print data that is stored in hard disk 128, when performing the mailbox print operation. Voice controller 123 stores voice data for a voice guidance. Upon receiving a voice guidance instruction (in synchronization with the user's operation) from panel controller 115 and job controller 122, voice controller 123 outputs the corresponding voice data to speaker 124. It is preferable that the voice guidance is provided to assist the operation on the operation screen that is displayed on large-size touch panel 116. However, other types of voice guidance can be provided. Panel angle position sensor 125 detects an angle of large-size touch panel 116. Panel angle drive motor 126 receives a control signal from panel controller 115 and adjusts the angle of large-size touch panel 116. Although in this embodiment, the angle of large-size touch panel 116 is adjustable, the angle can be at a fixed position.

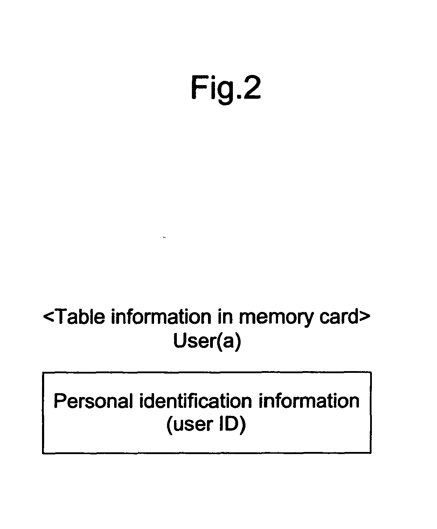

Fig. 2 illustrates the registration information of memory card 200. As shown in the figure, memory card 200 only stores user ID as personal identification information. This identification information is used for performing the user authentication and retrieving the user information. It is preferable to limit the registration information of memory card 200 to a user ID for security purposes. However, other personal information or group information can be stored in memory card 200.

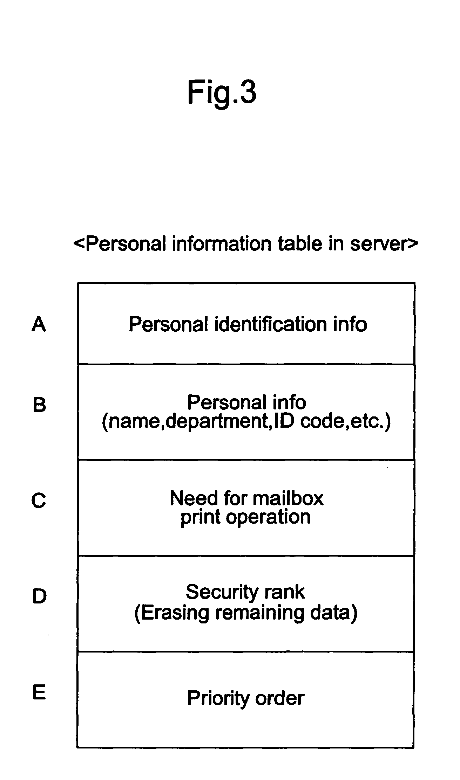

Fig. 3 illustrates a data structure of the personal information table that is registered in personal information server 102. A personal information table is prepared for each registered user. The personal information table includes user ID (A) (personal ID information), personal information (B) (e.g., department to which the user belongs), need for mailbox print operation (C), security rank (D), and priority order (E).

User ID (A) uses the same user ID stored in memory card 200 of the user as shown in Fig. 2.

Personal information (B) is not limited to the examples listed in this embodiment as long as the information relates to the personal information. However, in this embodiment, personal information (B) includes a personal name, department to which the user belongs, and ID code (not user ID). The personal name can be a group name.

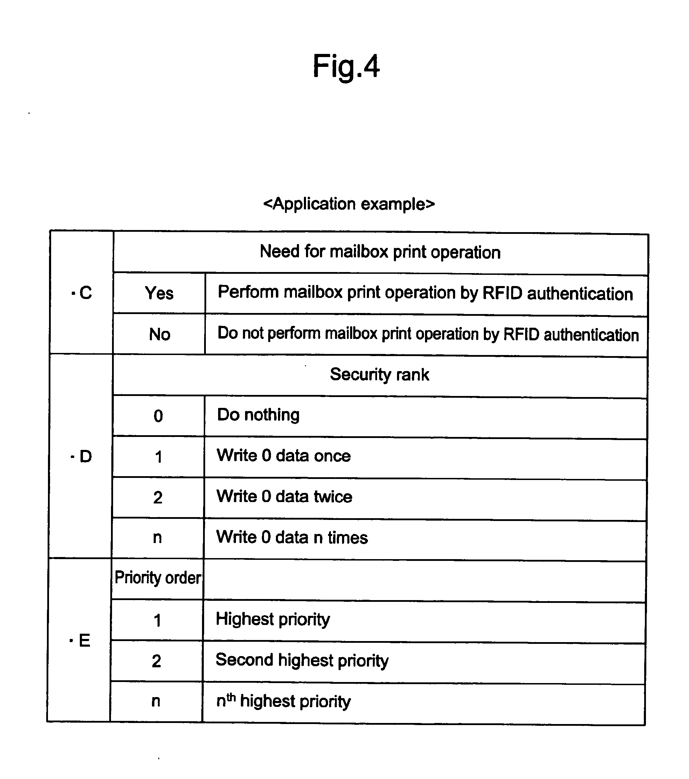

Fig. 4 illustrates a detailed application example of need for mailbox print operation (C), security rank (D), and priority order (E).

Need for mailbox print operation (C) indicates whether the mailbox print operation is requested. In this embodiment, "YES" is set when the mailbox print operation is performed under the user authentication based on the retrieved information from memory card 200 (RFID authentication), and "NO" is set when the mailbox print operation under the RFID authentication is not performed.

Security rank (D) indicates an erasing method (e.g., number of times data is erased) for erasing print data from hard disk 128 the data being specified by the mailbox print instruction. Security rank 0 indicates nothing is to be performed. Security rank 1 indicates "write 0 data once". Security rank 2 indicates "write 0 data twice". Security rank n indicates "write 0 data n times". Accordingly, the security level is increased by the number of times the data is written as the security rank becomes higher. The user can select a desired security rank.

Priority order (E) indicates which job is prioritized, when a job is instructed from an authenticated user (by RFID), and when a currently ongoing job is being performed. The priority order is set for each user.

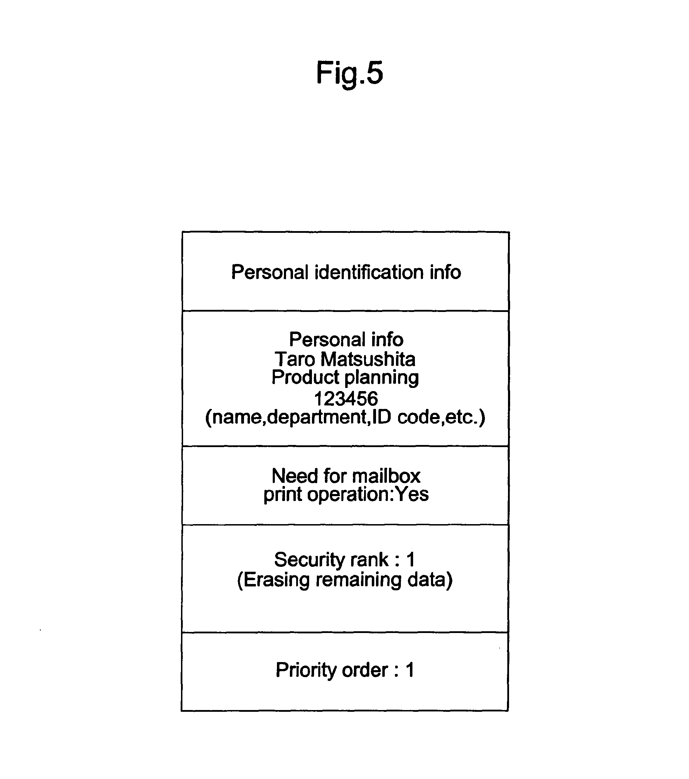

Fig. 5 illustrates a personal information table that has specific personal information in each field of the table. For example, in the field of personal information (B), user's personal name, department, ID code are included.

From now on, the operation of the present embodiment having the above described configuration is illustrated.

A user having "YES" in the field of need for mailbox print operation (C) (in the personal information table) transmits a mailbox print instruction from client PC 103 to multifunction apparatus 100.

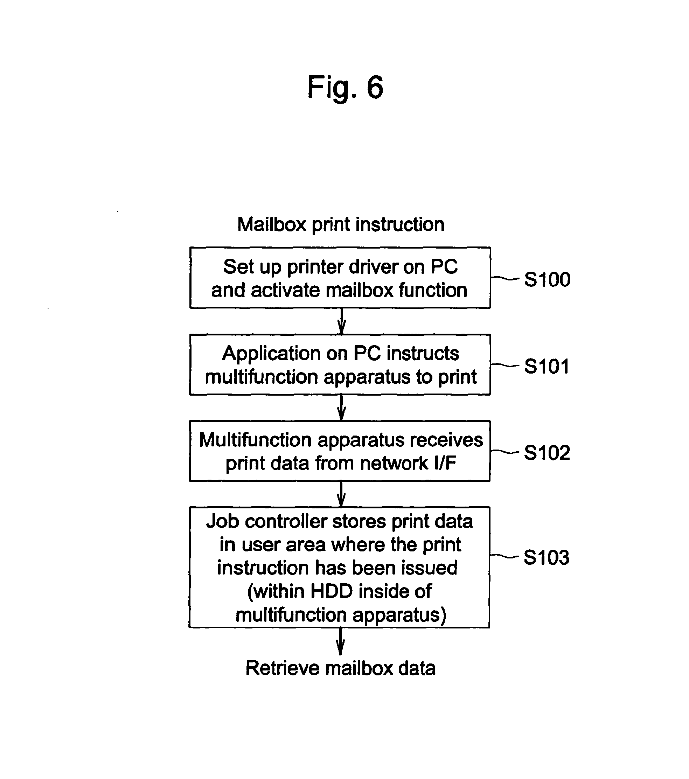

Fig. 6 illustrates a series of steps for client PC 103 and multifunction apparatus 100 when performing the mailbox print operation. The user starts a printer driver for multifunction apparatus 100 from client PC 103. The user inputs data from the keyboard and activates a mailbox function by opening a setup screen of the printer driver. The printer driver activates the mailbox function according to the keyboard input by the user (S100).

When the mailbox print operations is actually needed, the user transmits a print job instruction to multifunction apparatus 100 from an application operated on client PC 103. Upon receiving the print job instruction, the application on client PC 103 transmits the mailbox print instruction to multifunction apparatus 100 according to the setting of the printer driver (S 101).

Then, multifunction apparatus 100 receives the print data through network I/F 119 (S102). Job controller 122, when receiving the print data instructing the mailbox print operation, stores the print data in hard disk 128 within multifunction apparatus 100 (S 103). At this time, a user area for the user who instructed the print job is secured in the memory area of hard disk 128, and the print data is stored in the user area.

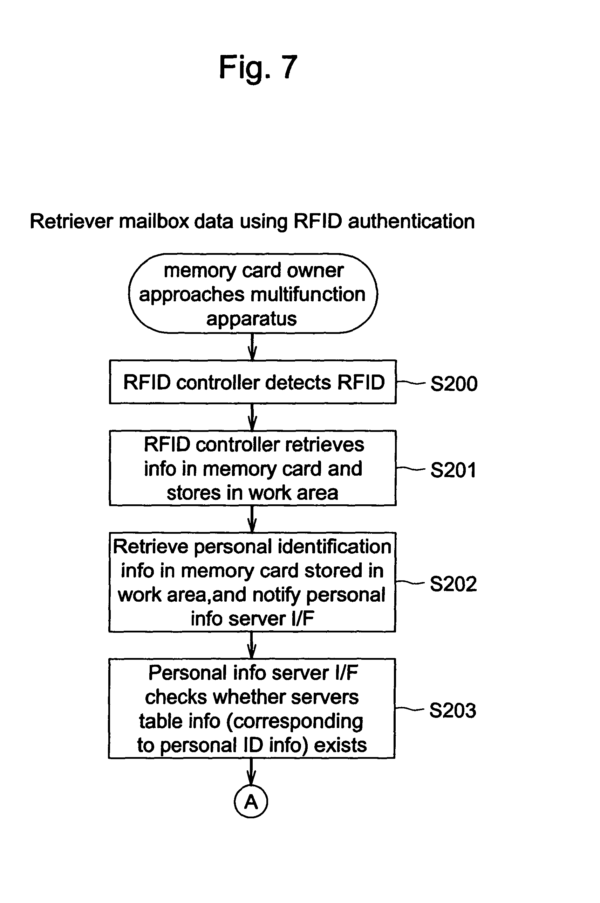

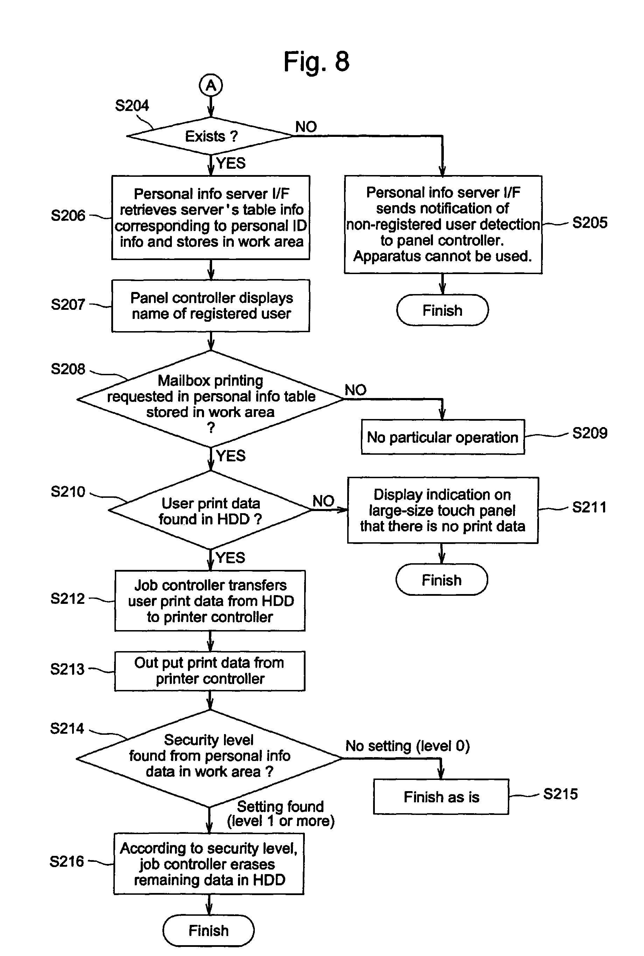

Figs. 7 and 8 illustrate a process of retrieving the print data stored in the user area in hard disk 128 and printing out the data. In this illustration, the description of controlling the job priority order is eliminated.

When a user (who instructed the mailbox printing job) having memory card 200 approaches multifunction apparatus 100, RFID controller 117 detects the user (S200). For example, memory card 200 having the personal identification information (user ID) is inserted into an employee badge holder carried by the user (e.g., a holder hanging from the user's neck). When the user carrying memory card 200 approaches the detection area of the RFID controller 117 (in this example, approximately within 1m range), RFID controller 117 scans the user ID in memory card 200 (S200).

RFID controller 117 stores the user ID scanned from the memory card 200 into work area 121 (S201). Personal information server I/F 120 retrieves the user ID stored in work area 121 and notifies personal information server 102 via network I/F 119 (S202).

As described later, upon receiving the user ID, personal information server 102 checks whether a personal information table of the user having the scanned user ID is registered, and transmits data indicating whether such a table is registered.

Personal information server I/F 120 checks whether the user is registered in personal information server 102, determining from the transmitted data indicating whether table is registered (S203). When the user's personal information table is not registered (S204), personal information server I/F 120 outputs "notification of non-registered user detection" to panel controller 115. Upon receiving the "notification of non-registered user detection", a message stating that the apparatus cannot be used is displayed on large-size touch panel 116 (S205).

When the user's personal information table is registered (S204), personal information server I/F 120 retrieves, from personal information server 102, the personal information table data of the detected user and stores the information in work area 121 (S206).

Panel controller 115 retrieves the detected user name from the personal information table data stored in work area 121 and displays the name on large size touch panel 116 as a person who is authenticated to use the apparatus (S207). For example, when the name registered in field (B) of the personal information table is "Taro Matsushita", characters such as "Taro Matsushita is authenticated" are displayed.

From the personal information table data stored in work area 121, job controller 122 retrieves and checks need for mailbox print operation (C) (S208). When "NO" is specified, no particular operation is performed (S209). When "YES" is specified, it is determined whether the print data of the user is stored in hard disk 128 (S210). When the print data is not stored, panel controller 115 is instructed to display a message indicating that there is no print data (S211). However, the apparatus can be configured so as not to display such a message indicating that there is no print data.

When the print data of the user is stored in hard disk 128, job controller 122 retrieves the print data from the user area of hard disk 128 and transfers the data to printer controller 111 (S212). Printer controller 111, upon receiving the print data, converts the data format and outputs the print data (S213).

Accordingly, when "YES" is specified for the mailbox print operation in the personal information table, the client PC 103 instructs a mailbox print operation so that when the user who has stored the print data in multifunction apparatus 100 approaches multifunction apparatus 100, the print data is automatically output without manually reentering the mailbox ID or password.

Upon completing the print data output, job controller 122 retrieves and checks security rank (D) in personal information table data stored in work area 121 (S214). When the security level is set at zero, the process is terminated (S215). When the security level is one or more, 0 data is written over the print data as many times as specified by the security level in order to erasing the print data within hard disk 128 (S216).

Accordingly, the print data stored in hard disk 128 is erased according to the security level indicated in the security rank set by each user.

According to the embodiment of the present invention, when a user enters the detection area, the RFID authentication enables the retrieval of mailbox print data and automatic printout of the data without waiting for the manual input of the user ID information (e.g., mailbox ID of the user). Therefore, it is possible to shorten the time spent by a user in front of the multifunction apparatus when the mailbox print operation is instructed.

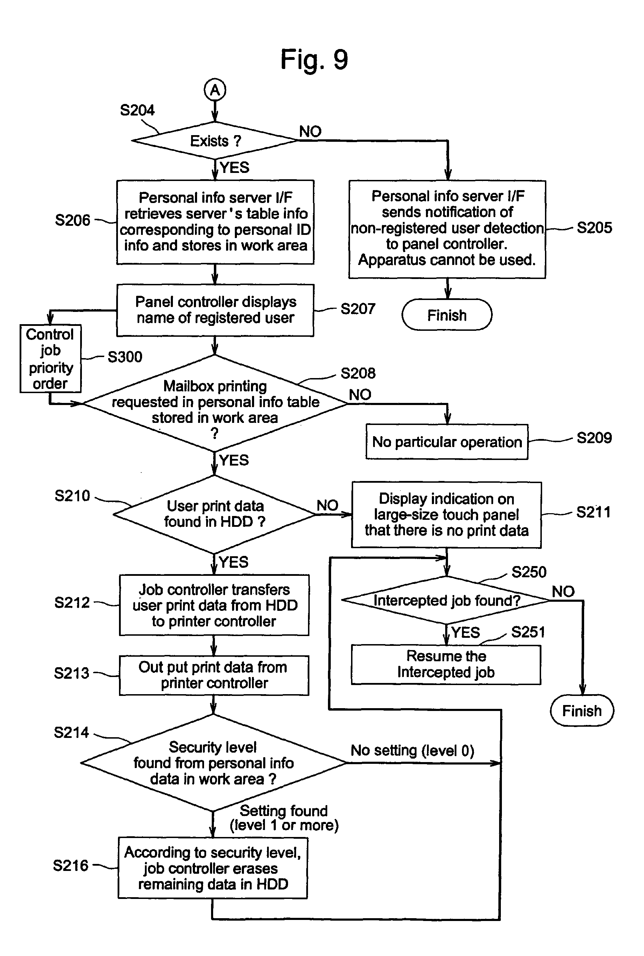

Figs. 9, 10, and 11 illustrate an operation for controlling the job priority order.

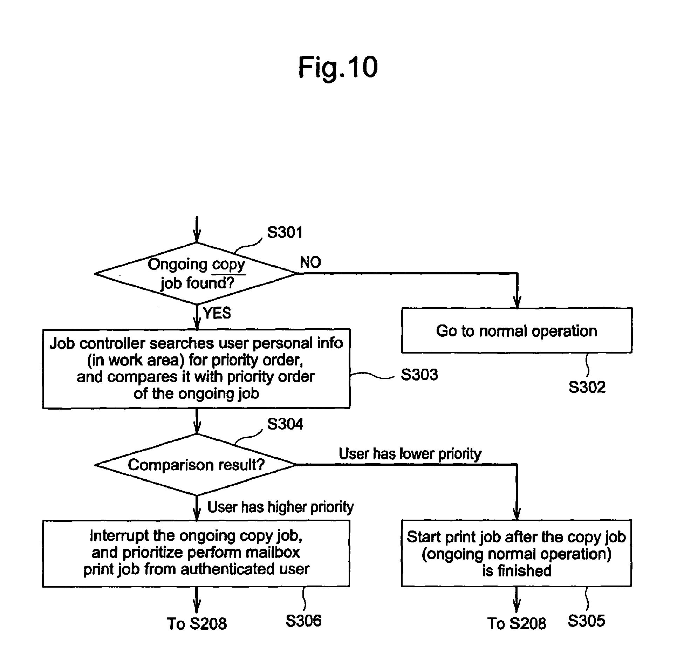

As shown in Fig. 9, the operation is the same as what is illustrated in Figs. 7 and 8, up to step S207 where the registered user name is displayed. When the registered user name is displayed (S207), the job priority order control is performed (S300). Fig. 10 is a flowchart of a copy job currently being performed. As shown in Fig. 10, it is determined whether there is an ongoing job (S301). When there is no ongoing job, the control moves to a normal operation (S302). In other words, the control directly moves to step S208.

When there is an ongoing copy job at step S301, Job controller 122 searches the personal information table data stored in work area 121 for priority order (E) information. Then, the information is compared with the priority order of the user who requested the ongoing copy job (S303). Job controller 122 stores, in advance, the priority order information for the ongoing job, the information being set in the personal information table of the requester (user). When there is a need to perform an overlapping job, the priority orders for both users are compared to determine which job needs to be prioritized. When the priority order of the user of the incoming job is lower (S304), the print job of the user is put on hold. Once the ongoing copy job is completed, the print job is started (S305). However, when the priority order of the user of the incoming job is higher (S304), the ongoing copy job is interrupted and the mailbox print job of the incoming user is received and started (S306). When the priority orders of both users are the same, the ongoing job is prioritized.

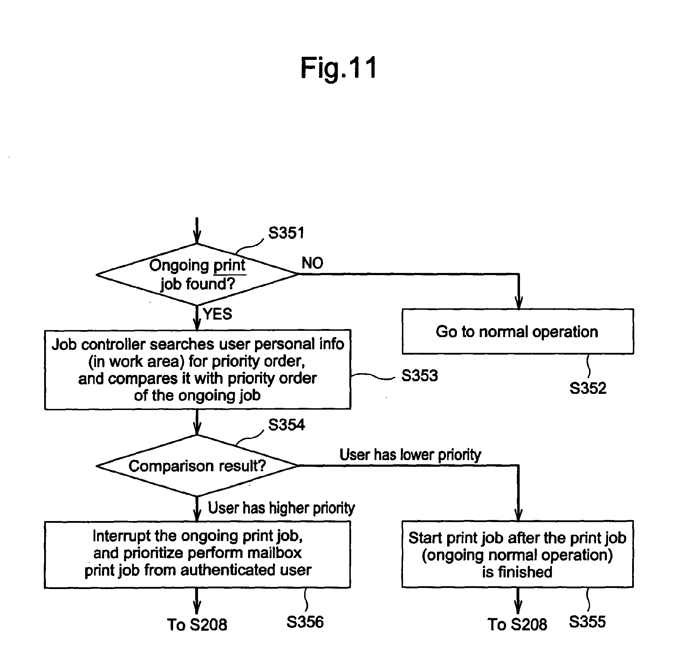

Fig. 11 is a flowchart illustrating a situation where there is an ongoing print job. As shown in Fig. 11, it is determined whether there is an ongoing job (S351). When there is no ongoing job, the control moves to a normal operation (S352). In other words, the control directly moves to step S208. When there is an ongoing print job, job controller 122 searches the personal information table data stored in work area 121 for the priority order of the incoming user. Then, the priority order is compared with the priority order of the user who requested the ongoing print job (S353). When the priority order of the user of the incoming job is lower (S354), the incoming job is put on hold. Once the ongoing print job is completed, the incoming mailbox print job is started (S355). However, when the priority order of the user of the incoming job is higher (S354), the ongoing print job is interrupted and the mailbox print job of the incoming user is received and started (S356). When the priority orders of both users are the same, the ongoing job is prioritized.

As shown in Fig. 9, when the ongoing job is interrupted because of the job priority control, it is determined whether there is an interrupted job at step S250. When there is an interrupted job, the interrupted job is resumed (S251).

As described above, priority order (E) in the personal information table is set for each user. When performing a job selected by an authenticated user and when there is an ongoing job prior to the new job, priority orders of both users are compared. Then, a job of the user having a higher priority order is prioritized.

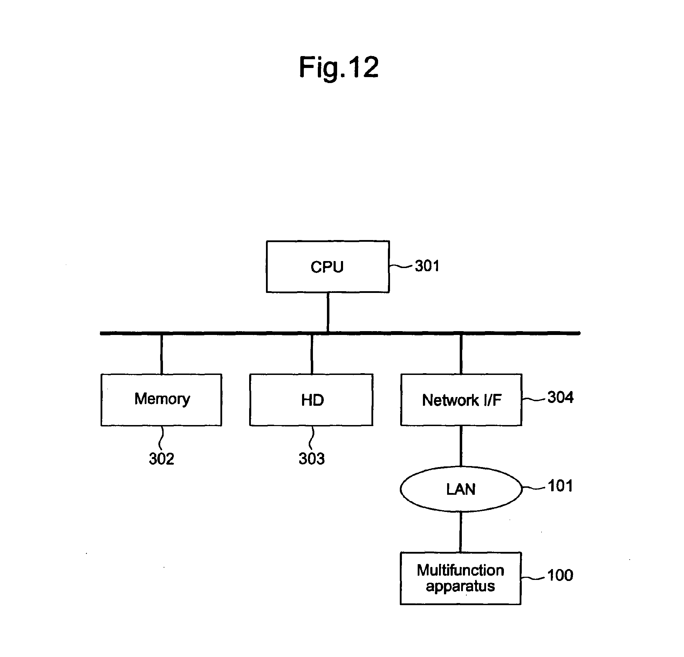

Fig. 12 is a functional block diagram of server 102 connected to multifunction apparatus 100, via LAN 101, according to the embodiment. Server 102 shown in Fig. 12 includes CPU 301 that controls the entire apparatus. Memory 302 stores control programs to be used by CPU 301 for controlling the entire apparatus, and has a function to perform as work memory of CPU 301. Hard disk (HD) 303 stores information to be distributed to multifunction apparatus 100 according to the present embodiment. For example, when server 102 functions as a server for personal information, the personal information table is stored for each registered user. When server 102 functions as a web server, server 102 stores menus for multifunction apparatus 100 and related jobs. Network interface (I/F) 304 interfaces with LAN 101.

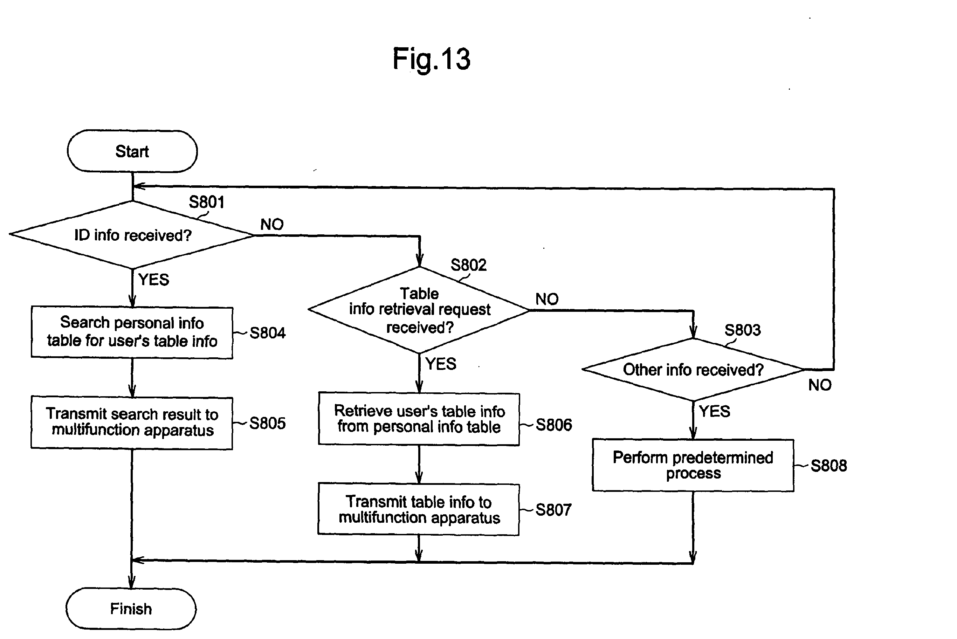

Fig. 13 is a flowchart illustrating a process of server 102 having the above-described configuration. In Fig. 13, in particular, server 102 functions as a personal information server.

Server 102 as a personal authentication server monitors, in an idle state, a reception of various information from multifunction apparatus 100 according to the present embodiment. In particular, server 102 monitors receptions of identification information (user ID) (S801), request to retrieve table information (S802), and other information (S803).

When identification information is received at S801, during the monitoring of receptions of various information, table information of the registered user is searched from the personal information table stored in hard disk 303 (S804). Accordingly, it is determined whether the received identification information is registered in personal information table. Then, the result of the search (i.e., whether the identification information is registered) is transmitted to the accessing multifunction apparatus 100 (S805). When the transmission process of the search result is completed, server 102 terminates the process.

When a request to retrieve the table information is received at S802, table information of the registered user is retrieved from the personal information tables stored in hard disk 303 (S806). Accordingly, the personal information table of the registered user (associated with the previously received identification information) is retrieved. Then, the personal information table is transmitted to the accessing multifunction apparatus 100 (S807). When the transmission process of the table information is completed, server 102 terminates the process.

When other information is received at S803, server 102 performs a process required for the information (S808). When the required process is completed, server 102 terminates the process.

In the above illustration, personal information server 102 stores the personal information table, which is obtained by multifunction apparatus 100 when necessary. However, it is possible to have a method in which the personal information table for each user is stored in hard disk 128 of multifunction apparatus 100, so that multifunction apparatus 100 by itself can perform RFID authentication and make determination for the need for mailbox print operation.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2004-052328 filed on February 26, 2004, entire content of which is expressly incorporated by reference herein.

## Claims

1. A multifunction apparatus having a plurality of functions including a printer function, the apparatus comprising:
a printer that outputs print data;
a memory that stores print data for which a mailbox print operation is instructed by a client computer;
an information retrieval unit that transmits an electromagnetic wave signal to a memory card carried by a user and retrieves identification information of the user, the user having entered a detection area; and
a controller that delivers the print data of the user to said printer when the print data is stored in said memory, after the user is authenticated based on the identification information retrieved from the memory card.

2. The multifunction apparatus according to claim 1, wherein said controller determines whether the mailbox print operation is requested based on information regarding the mailbox print operation preset by the user and retrieves, from the memory, and delivers the print data of the user only when the mailbox print operation is requested.

3. The multifunction apparatus according to claim 1, wherein said controller determines, after said printer outputs the print data, an erasing method of the print data remaining in said memory and erases the print data according to the erasing method.

4. The multifunction apparatus according to claim 1, wherein said controller determines, after the user is authenticated, whether a currently ongoing job is to be interrupted based on priority order information preset for users, interrupts the currently ongoing job when a priority order of the newly authenticated user is higher than a priority order of the user who requested the currently ongoing job, and accepts the job of the newly authenticated user.

5. The multifunction apparatus according to claim 2, wherein a personal information table is stored in a server connected through a network, the table registering personal information of each registered user, and wherein the information regarding the mailbox print operation, the erasing method of the print data, and the priority order information are obtained from the server.

6. The multifunction apparatus according to claim 1, further comprising:
a memory apparatus that stores a personal information table, the table registering personal information of each registered user, wherein the identification information, the information regarding the mailbox print operation, the erasing method of the print data, and the priority order information are registered in the personal information table.

7. A method for using a multifunction apparatus having a printer, the multifunction apparatus including a memory that stores print data for which a mailbox print operation is instructed by a client computer, the method comprising:
transmitting an electromagnetic wave signal to a memory card carried by a user;
retrieving identification information of the user, the user having entered a detection area; and
delivering the print data of the user to the printer when the print data is stored in the memory, after the user is authenticated based on the identification information retrieved from the memory card.

8. The method according to claim 7, wherein the delivering determines whether the mailbox print operation is requested based on information regarding the mailbox print operation preset by the user and retrieves, from the memory, and delivers the print data of the user only when the mailbox print operation is requested.

9. The method according to claim 7, wherein the delivering determines, after the printer outputs the print data, an erasing method of the print data remaining in the memory and erases the print data according to the erasing method.

10. The method according to claim 7, wherein the delivering determines, after the user is authenticated, whether a currently ongoing job is to be interrupted based on priority order information preset for users, interrupts the currently ongoing job when a priority order of the newly authenticated user is higher than a priority order of the user who requested the currently ongoing job, and accepts the job of the newly authenticated user.

11. The method according to claim 8, wherein a personal information table is stored in a server connected through a network, the table registering personal information of each registered user, and wherein the information regarding the mailbox print operation, the erasing method of the print data, and the priority order information are obtained from the server.
